# EUROPEAN PATENT APPLICATION

(11) **EP 4 685 668 A1**
(43) Date of publication of application: **28.01.2026**
(21) Application number: 24191239.3
(22) Date of filing: 26.07.2024
(51) Int. Cl.: G06F 16/901, G06F 16/9032, G06N 5/025, G06N 20/00

(54) **SYSTEM AND METHOD FOR SEMI-AUTOMATING DESIGN OF ENGINEERING DIAGRAMS**

(71) Applicant: Siemens Aktiengesellschaft, 80333 München (DE)
(72) Inventor: Banerjee, Amar, 412207 Pune, Maharastra (IN); Ganesh, Gautam, 560030 Bangalore (IN); Kamath, Yogesh, 560076 Bangalore, Karnataka (IN)
(74) Representative: Isarpatent

(57) **Abstract**

Disclosed is a method (100) for semi-automating design of engineering diagrams. The method comprises receiving, via a user interface (312), a natural language query related to an engineering diagram from a user. The method further comprises processing the received natural language query using a language model (314) to interpret the query and generate a corresponding structured query. The method further comprises querying a knowledge graph (304) with the structured query. The knowledge graph includes nodes representing engineering diagram elements and edges representing connections between the engineering diagram elements. The method further comprises retrieving query results from the knowledge graph including relevant engineering diagram elements and connections. The method further comprises conducting one or more of predictive analysis and sequence prediction on the query results to recommend engineering diagram elements and their connections. The method further comprises displaying, via the user interface, the recommended engineering diagram elements and their connections.

## Description

The present invention pertains to the field of computer-aided design, and more particularly to systems and methods for semi-automating the design of engineering diagrams, such as Piping and Instrumentation Diagrams (P&IDs).

Engineering diagrams, particularly Piping and Instrumentation Diagrams (P&IDs), play an important role in various industries, including chemical processing, power generation, and manufacturing. These diagrams provide a schematic representation of the functional relationship between piping, instrumentation, and system components. Traditionally, the design and validation of P&IDs, especially in greenfield projects, have been manual processes that rely heavily on the expertise and experience of engineers.

However, this traditional approach faces several challenges. One major factor is that there is an ongoing expertise drain as experienced professionals retire, leaving a knowledge gap that is difficult to fill. This loss of domain-specific knowledge affects the quality and efficiency of new projects. Further, the reliance on a limited number of experts can create bottlenecks and delays in large-scale projects, leading to increased costs. Furthermore, the manual nature of the design process is prone to human errors, which can be costly, particularly in greenfield projects where there is no existing infrastructure to reference.

Moreover, the emphasis on extensive experience can create barriers for new talent entering the field, resulting in knowledge silos within organizations. As technology and standards evolve, expertise can become outdated, further complicating the design process. While some tools like Computer-Aided Design (CAD) software, rule-based systems, and databases offer limited automation, they still require substantial manual input and are not fully adaptable to the complex and evolving nature of engineering projects.

The industry has attempted to address these challenges through various means, such as the combination of manual expertise, standard templates, checklists, and guidelines. Subject matter experts would manually create and validate each element in the engineering diagram, a process that was time-consuming and often created bottlenecks. Standard templates were used to expedite the design process, but these lacked flexibility for specific project requirements. Best practices, guidelines, and checklists were employed to reduce errors, but these methods were not exhaustive and still required manual verification. Multiple rounds of peer reviews were conducted to ensure accuracy and completeness. Computer-aided design (CAD) tools offered some level of automation and error-checking. Rule-based expert systems provided limited automation for validating certain elements based on predefined rules. Database systems stored information about common elements and their attributes for reference during the design process. In some cases, simulation tools were used to validate the functionality of an engineering diagram before implementation. While these techniques have merits, they often lacked scalability, were prone to human error, and could be inefficient for complex or novel systems.

Therefore, there is a need for a more efficient and errorminimizing solution in the design of engineering diagrams, particularly P&IDs. The present invention seeks to address these issues by leveraging existing knowledge, adapting to new information, and providing intelligent recommendations to streamline the design process while maintaining high standards of accuracy and safety.

The object of the present invention is achieved by a method for semi-automating design of engineering diagrams. The method comprises receiving, via a user interface, a natural language query related to an engineering diagram from a user. The method further comprises processing the received natural language query using a language model to interpret the query and generate a corresponding structured query. The method further comprises querying a knowledge graph with the structured query. The knowledge graph includes nodes representing engineering diagram elements and edges representing connections between the engineering diagram elements. The method further comprises retrieving query results from the knowledge graph including relevant engineering diagram elements and connections. The method further comprises conducting one or more of predictive analysis and sequence prediction on the query results to recommend engineering diagram elements and their connections. The method further comprises displaying, via the user interface, the recommended engineering diagram elements and their connections.

In one or more embodiments, the method further comprises receiving, via the user interface, user feedback on the recommended engineering diagram elements and their connections, and updating the knowledge graph based on the user feedback.

In one or more embodiments, the method further comprises validating the recommended engineering diagram elements and their connections by comparing them against historical data within the knowledge graph.

In one or more embodiments, the predictive analysis utilizes machine learning algorithms including at least one of random forest or decision trees to identify common patterns of the engineering diagram elements frequently used together.

In one or more embodiments, the sequence prediction utilizes Long Short-Term Memory (LSTM) algorithms to determine subsequent engineering diagram elements following initially recommended engineering diagram elements.

In one or more embodiments, the knowledge graph has each node and edge being semantically tagged with domain-specific metadata.

In one or more embodiments, the language model is a Large Language Model (LLM) configured to convert the natural language query into a SPARQL query for querying the knowledge graph.

In one or more embodiments, the method further comprises implementing application programming interfaces (APIs) to integrate with engineering design tools.

The object of the present invention is also achieved by a system comprising one or more processing units and a memory unit communicatively coupled to the one or more processing units. Herein, the memory unit comprises an engineering diagram design module stored in the form of machine-readable instructions executable by the one or more processing units, wherein the engineering diagram design module is configured to perform aforementioned method steps for semi-automating design of engineering diagrams.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
FIG 1 is a flowchart of a method for semi-automating design of engineering diagrams, in accordance with one or more embodiments of the present invention;
FIG 2 is a block diagram representation of a system for semi-automating design of engineering diagrams, in accordance with one or more embodiments of the present invention;
FIG 3 is a flow diagram depicting a sequence flow for using knowledge graph for automating design of engineering diagrams, in accordance with one or more embodiments of the present invention;
FIG 4 is a flowchart depicting interaction between components for automating design of engineering diagrams, in accordance with one or more embodiments of the present invention;

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for semi-automating design of engineering diagrams are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

For purposes of the present invention, the term "engineering diagrams" includes visual representations used to document and communicate the design, structure, and operation of complex systems in various industries. These diagrams can include, but are not limited to, piping and instrumentation diagrams (P&IDs), process flow diagrams (PFDs), electrical schematics, and mechanical drawings. Engineering diagrams typically consist of graphical symbols representing components and equipment, lines or arrows representing connections or flows, and textual annotations providing additional information. The process of "semi-automating design of engineering diagrams" involves utilizing computer-aided design (CAD) tools, artificial intelligence (AI), and knowledgebased systems to partially automate the creation and modification of engineering diagrams. This approach aims to reduce the manual effort required by human designers while leveraging historical data, domain expertise, and best practices to improve the efficiency, accuracy, and consistency of the design process.

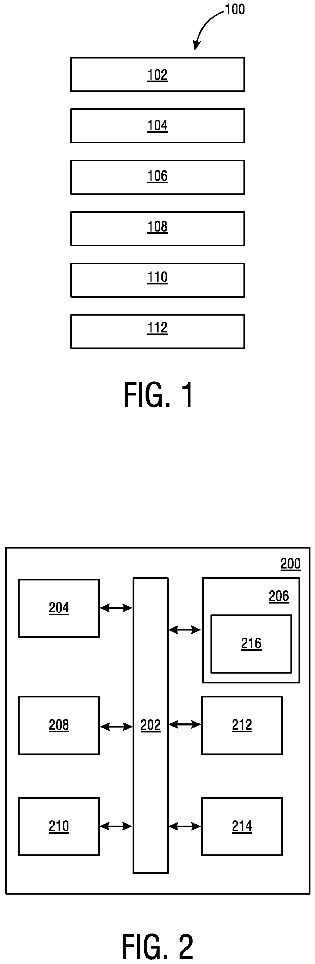

Referring to FIG 1, illustrated is a flowchart of a method (as represented by reference numeral 100) for semi-automating design of engineering diagrams, in accordance with an embodiment of the present invention. The method 100 leverages a combination of natural language processing, knowledge graph technology, and machine learning to streamline the design process, enhance accuracy, and reduce manual effort. By intelligently interpreting user input, accessing a repository of domain-specific knowledge, and predicting appropriate design elements and connections, the method 100 improves the efficiency and effectiveness of engineering diagram creation. This approach addresses the limitations of traditional manual design methods and existing CAD tools, offering a more intuitive and intelligent solution for engineers and designers across various industries.

Referring to FIG 2, illustrated is a block diagram of a system 200 for semi-automating design of engineering diagrams, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for semi-automating design of engineering diagrams. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or nonvolatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for semi-automating design of engineering diagrams. In particular, the memory unit 206 includes an engineering diagram design module 216 to perform steps for the said purpose.

Referring to FIGS 1-2 in combination, various steps of the method 100 (as described hereinafter), which may be executed in the system 200, or specifically in the processing unit 204 of the system 200, for semi-automating design of engineering diagrams, are described. It may be appreciated that although the method 100 is illustrated and described as a sequence of steps, it may be contemplated that various embodiments of the method 100 may be performed in any order or different combinations, and need not include all of the illustrated steps.

At step 102, the method 100 includes receiving, via a user interface, a natural language query related to an engineering diagram from a user. This step allows users to interact with the system 200 using natural language, making the design process more intuitive and accessible. The user interface may be implemented as part of a standalone application or integrated into existing engineering design tools through the API integration capabilities of the system 200. The natural language query received from the user can vary in complexity and specificity. For example, a user might input a query such as "Suggest appropriate valves for controlling flow from a reactor to a distillation column in a chemical processing plant" or "Design a basic layout for a thermal power plant with a focus on the steam generation system." The flexibility of natural language input allows users of varying expertise levels to interact effectively with the system.

The natural language query serves as the starting point for the process of generating recommendations. By allowing users to express their needs in natural language, the system 200 can capture specific element requests as well as contextual information about the project, such as the type of facility being designed or specific operational requirements. This contextual information allows for generating accurate and relevant recommendations in subsequent steps of the process.

The user interface is designed to be user-friendly and intuitive, allowing engineers to express their design requirements in a manner that feels natural to them. This approach eliminates the need for users to learn complex query languages or navigate through multiple menus and options to find the information they need. In some examples, the user interface may also provide features to assist users in formulating their queries. This could include autocomplete suggestions based on commonly used terms in engineering diagrams, or a list of example queries to help users understand the types of questions the system can handle. Such features can help users, especially those new to the system, to make the most effective use of the natural language input capability.

At step 104, the method 100 includes processing the received natural language query using a language model to interpret the query and generate a corresponding structured query. That is, once the natural language query is received, it is passed to the language model for interpretation and conversion into a structured query format. This is done for translating the user's input into a format that can be effectively used to search a knowledge graph (as discussed later) and generate relevant recommendations. The language model employed in this step is specifically designed to handle engineering and technical language. In one embodiment, the language model is a Large Language Model (LLM) configured to convert the natural language query into a SPARQL query for querying the knowledge graph. The use of an LLM allows the system 200 to understand complex technical terminology, context-specific jargon, and the nuanced relationships between different engineering concepts.

During the processing of the natural language query, the language model identifies the main components of the query, such as the specific engineering elements mentioned, the type of engineering diagram being referenced, and any constraints or requirements specified by the user. For example, in a query like "Suggest appropriate valves for controlling flow from a reactor to a distillation column in a chemical processing plant," the language model would identify "valves," "reactor," "distillation column," and "chemical processing plant" as key elements. Next, the language model interprets the relationships between these components. In the given example, it would understand that the user is looking for valves specifically for controlling flow between two other components (the reactor and distillation column) within a particular context (a chemical processing plant). The language model also accounts for any implicit information in the query. For instance, the request for "appropriate" valves implies that the system 200 should consider factors such as the typical operating conditions in a chemical processing plant, safety requirements, and industry standards when making recommendations.

After interpreting the query, the language model generates a corresponding structured query. This structured query is formatted in a way that can be directly used to search the knowledge graph. In the case where SPARQL is used, the generated query may include specific graph patterns to match against the nodes and edges in the knowledge graph. The conversion from natural language to the structured query format is a process that involves mapping natural language concepts to the specific structure and terminology used in the knowledge graph. This may involve expanding acronyms, resolving ambiguities, and inferring additional relevant search terms based on the context of the query.

At step 106, the method 100 includes querying a knowledge graph with the structured query. Herein, the knowledge graph includes nodes representing engineering diagram elements and edges representing connections between the engineering diagram elements. This step involves using the structured query generated by the language model to search and retrieve relevant information from the knowledge graph. The knowledge graph is compatible with DEXPI ontology (P&ID Design Standard) that allows the data to be consistent with global standard. The knowledge graph is structured as a network of interconnected nodes and edges, where each node represents a specific engineering diagram element, such as a valve, pump, reactor, or sensor. The edges in the knowledge graph represent the various types of connections and relationships that can exist between these elements.

In the present embodiments, the knowledge graph has each node and edge being semantically tagged with domain-specific metadata. That is, each element and connection is tagged with semantic metadata to capture its domain-specific characteristics. This metadata provides additional context and information about each element and connection. For example, a node representing a valve may be tagged with information about its type, typical operating parameters, material composition, and relevant safety standards. An edge representing a connection between a pump and a pipe may be tagged with information about flow rates, pressure tolerances, and common failure modes.

When the system 200 queries the knowledge graph with the structured query, it searches for nodes and edges that match the patterns specified in the query. The search process leverages the semantic structure of the knowledge graph to ensure that the most relevant and contextually appropriate elements are retrieved. For instance, if the structured query is searching for valves suitable for controlling flow between a reactor and a distillation column in a chemical processing plant, the system 200 may look for valve nodes that are commonly connected to reactor and distillation column nodes in the context of chemical processing plants. The system 200 may also consider the metadata associated with these nodes and edges to ensure that the retrieved valves meet the necessary operational and safety requirements for the specified application.

The querying process may involve multiple steps and may use various graph traversal algorithms to explore the relationships between different nodes. For example, the system 200 may start by identifying all valve nodes that meet certain basic criteria, then narrow down this set by examining the connections these valves typically have in relevant contexts, and finally refine the results further based on metadata tags related to performance, safety, or regulatory compliance. The knowledge graph query may also take into account historical usage patterns stored in the graph. If certain combinations of elements have been frequently used and validated in past designs, the query process may prioritize these combinations in the search results. The result of this querying process is a set of relevant engineering diagram elements and connections that match the user's query. This set of results forms the basis for the subsequent steps of predictive analysis and sequence prediction, which will further refine and organize these results into actionable recommendations for the user.

At step 108, the method 100 includes retrieving query results from the knowledge graph including relevant engineering diagram elements and connections. This step involves extracting and organizing the information identified during the querying process of the knowledge graph. The query results retrieved from the knowledge graph includes a set of nodes representing engineering diagram elements and edges representing connections between these elements, all of which are relevant to the user's original natural language query. These results are pulled from the knowledge graph based on the patterns and criteria specified in the structured query generated by the language model.

For each relevant node retrieved, the system 200 extracts the basic information about the engineering diagram element it represents as well as all associated metadata. This metadata may include technical specifications, operational parameters, safety considerations, and regulatory requirements associated with the element. Similarly, for each relevant edge, the system 200 retrieves information about the nature of the connection it represents, including any constraints or considerations for implementing that connection in a real-world engineering diagram.

The retrieval process also captures information about the relationships between the retrieved elements. This includes both direct connections (represented by edges in the knowledge graph) and indirect relationships that may be inferred from the overall structure of the knowledge graph. In cases where multiple options are available for a particular element or connection, the system 200 may retrieve all relevant alternatives. For example, if the query relates to valves for controlling flow in a chemical processing plant, the system 200 may retrieve information about several types of valves that could potentially meet the specified requirements.

In some implementations, the retrieval process may also include gathering relevant historical data stored in the knowledge graph. This may include information about how frequently certain elements or connections have been used in similar contexts in past designs, or data about the performance and reliability of different configurations.

The retrieved results are organized in a structured format that preserves the relationships and hierarchies present in the knowledge graph. This structure is important for the subsequent steps of analysis and recommendation generation, as it allows the system 200 to understand how individual elements fit together in the context of a complete engineering diagram.

At step 110, the method 100 includes conducting one or more of predictive analysis and sequence prediction on the query results to recommend engineering diagram elements and their connections. This step involves processing the retrieved query results using analytical techniques to generate meaningful and contextappropriate recommendations for the user's engineering diagram design.

In an embodiment, the predictive analysis utilizes machine learning algorithms including at least one of random forest or decision trees to identify common patterns of the engineering diagram elements frequently used together. These algorithms analyse the historical data and metadata associated with the retrieved elements and connections, looking for recurring combinations and configurations that have proven effective in similar contexts. For example, if the user is designing a chemical processing plant, the predictive analysis may identify that certain types of valves are frequently used in conjunction with specific types of pipes when controlling flow from a reactor to a distillation column. The analysis takes into account factors such as the materials involved, typical operating conditions, safety requirements, and regulatory standards relevant to the specific industry and application.

In some implementations, the predictive analysis may also consider the frequency and the success rate of different configurations in past designs. For instance, if a particular combination of elements has been used successfully in numerous similar projects, the system 200 may more likely recommend such combination. Further, the predictive analysis may also account for factors like recent technological advancements or changes in industry standards, which may make newer, less frequently used configurations more appropriate in some cases.

Additionally and/or alternatively, the sequence prediction utilizes Long Short-Term Memory (LSTM) algorithms to determine subsequent engineering diagram elements following initially recommended engineering diagram elements. This aspect of the analysis focuses on the logical and temporal relationships between different elements in an engineering diagram. The sequence prediction considers the typical order in which elements are arranged in a functional system. For instance, if a pump has been placed in the engineering diagram, the sequence prediction may suggest elements that typically follow a pump in the flow of materials, such as a check valve to prevent backflow, followed by a flow meter to monitor the pumped material.

Herein, the LSTM algorithms used for sequence prediction are particularly useful for capturing long-range dependencies in sequences. This means they can recommend logical sequences of elements even when there are complex intervening structures between related components. For example, in a power plant design, the system 200 may recommend a sequence of elements connecting a boiler to a turbine, even if there are multiple intermediate components like superheaters or pressure relief valves between them.

In the proposed implementation of the present disclosure, both the predictive analysis and sequence prediction take into account the specific context provided by the user's original query and any existing elements in the current design. The recommendations are generated based on the overall structure of the engineering diagram being developed. The system 200 combines the results of the predictive analysis and sequence prediction to generate a set of recommended engineering diagram elements and their connections. The recommendations generated in this step are designed to cover both the selection of individual elements and the overall structure of how these elements should be arranged/connected to form a functional and efficient structure.

In some embodiments, the method 100 further includes validating the recommended engineering diagram elements and their connections by comparing them against historical data within the knowledge graph. This validation step helps to ensure the reliability of the recommendations provided to the user. The validation process begins by accessing the historical data stored within the knowledge graph. This historical data may include information from past engineering diagram designs, including both successful implementations and designs that may have encountered issues. The data includes details about which combinations of elements and connections have been used in various contexts, their performance metrics, any problems encountered, and modifications made over time. Further, for each recommended engineering diagram element and connection, the system 200 compares it against this historical data.

For instance, the system 200 may check how often the recommended element or connection has been used in similar contexts in past designs. A high frequency of use in comparable situations can indicate a reliable choice. If available, the system 200 may also examine performance metrics associated with the recommended elements and connections. This could include factors such as efficiency, durability, maintenance requirements, or failure rates. The system 200 may further verify that the recommended elements and connections have been used in contexts similar to the current design scenario. This involves comparing factors such as the type of facility, operating conditions, and regulatory environment. The system 200 may further check that the recommended elements are compatible with each other and with any existing elements in the current design. This includes verifying that connected elements can physically and functionally work together.

The validation process may flag potential issues or inconsistencies for further review. For example, if a recommended connection has been used infrequently in similar contexts, or if it has been associated with performance issues in past designs, the system 200 will highlight this for the user's attention. The results of this validation process are used to refine the recommendations before they are presented to the user. Recommendations that pass the validation checks with high confidence are prioritized, while those that raise potential concerns are either deprioritized or presented with appropriate warnings or the like.

At step 112, the method 100 includes displaying, via the user interface, the recommended engineering diagram elements and their connections. This step involves presenting the results of the analysis and validation processes to the user in a clear format. The user interface, which may initially receive the natural language query from the user, now serves as the medium for displaying the recommendations. The display of recommendations is designed to be intuitive and easily interpretable by engineers of varying levels of experience. The recommended engineering diagram elements are presented visually, typically in a format that mimics the layout of a standard engineering diagram. Each recommended element is represented by its corresponding symbol or icon, consistent with industry-standard notation. The connections between the recommended elements are also displayed visually, usually as lines or arrows linking the relevant elements. These visual representations are accompanied by labels or annotations that provide key information about each element or connection, such as its type, basic specifications, and any other relevant parameters.

The present invention also provides for continuous improvement and refinement for semi-automating design of engineering diagrams. For this purpose, the method 100 includes receiving, via the user interface, user feedback on the recommended engineering diagram elements and their connections; and updating the knowledge graph based on the user feedback. That is, after displaying the recommended engineering diagram elements and their connections, the user interface provides mechanisms for users to interact with and provide feedback on these recommendations. This feedback can take various forms, depending on the specific implementation of the user interface.

Users may have the option to accept, reject, or modify individual recommended elements or connections. For example, a user may accept a recommended valve but reject the suggested connection point, or modify the specifications of a recommended pump. The user interface may provide buttons, checkboxes, or drag-and-drop functionality to facilitate this feedback process. Further, the user interface may also allow users to suggest alternative elements or connections that were not included in the original recommendations. As users interact with the recommendations and provide feedback, the system 200 captures and processes this information. Each feedback is associated with the specific context of the original query and the resulting recommendations, ensuring that the system 200 understands the conditions under which the feedback was provided.

Once the user feedback is received, the system 200 proceeds to update the knowledge graph based on this feedback. This updating process enables the system 200 to learn and improve over time. Herein, for accepted recommendations, the system 200 may reinforce the relationships and attributes in the knowledge graph that led to these recommendations. On the other hand, when recommendations are rejected, the system 200 analyses the context of the rejection and updates the knowledge graph accordingly. This may involve reducing the likelihood of making similar recommendations in comparable contexts in the future.

In an implementation, the method 100 further comprises implementing application programming interfaces (APIs) to integrate with engineering design tools. Such implementation of APIs allows the system 200 for semi-automating design of engineering diagrams to interact with existing engineering design software and workflows. The APIs serve as a bridge between the system and various engineering design tools commonly used in the industry. These design tools may include computer-aided design (CAD) software, specialized piping and instrumentation diagram (P&ID) tools, or other engineering-specific applications (including, but not limited to, COMOS and CAD-CAM) .

The implementation of these APIs involves creating standardized interfaces that define how the system 200 can communicate with external design tools. These interfaces specify the methods for data exchange, the format of information transfer, and the protocols for initiating and responding to requests between the system 200 and the design tools. The APIs define the format and structure in which design data should be transmitted, ensuring that elements, connections, and associated metadata from the design tools can be accurately interpreted by the system 200.

It may be contemplated that the API implementation provides the ability to import data from engineering design tools into the system 200. This allows the system 200 to access and analyse existing designs or partially completed diagrams. Further, the APIs also enable the system 200 to export its recommendations and generated designs back into the format used by the engineering design tools. This ensures that the output from the system 200 can be directly integrated into the user's existing design environment. This integration capability enhances the utility of the system 200, allowing engineers to leverage its advanced features within their familiar design environments, thereby improving efficiency and consistency in the engineering design process.

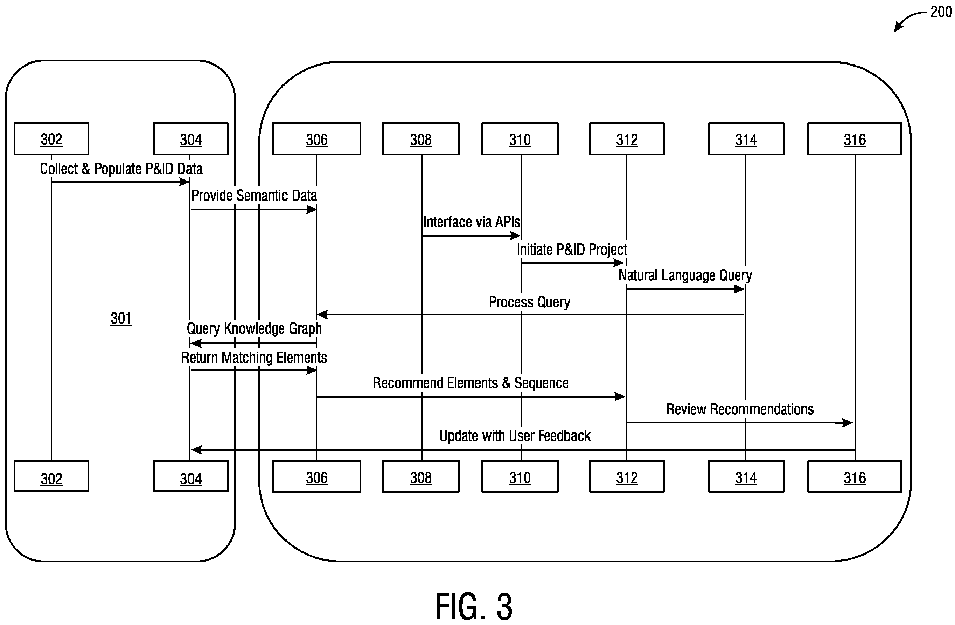

FIG 3 illustrates a schematic diagram of an architecture of the system 200 for semi-automating design of engineering diagrams. As illustrated, the system 200 includes an extraction module 301 which executes a data ingestion layer 302, where historical engineering diagrams (such as, Piping and Instrumentation Diagram (P&ID) data) is collected and assimilated into a knowledge graph 304. The knowledge graph 304 includes nodes representing engineering diagram elements and edges representing connections between the engineering diagram elements. Further, as illustrated, the system 200 incorporates a computational engine 306, an interface layer 308, engineering design tools 310, a user interface 312, and a language model 314.

The system initiates the process when a user starts a &ID project using the engineering design tools 310. The system 200 proceeds with receiving a natural language query related to an engineering diagram from a user via the user interface 312. This natural language query is then processed using the language model 314, to interpret the query and generate a corresponding structured query. In the present configuration, the language model is a Large Language Model (LLM), such as GPT-4, configured to convert the natural language query into a SPARQL query.

The computational engine 306 then queries the knowledge graph 304 with the structured query. The knowledge graph 304 returns matching elements to the computational engine 306. Based on these results, the computational engine 306 conducts predictive analysis and sequence prediction to recommend engineering diagram elements and their connections. The recommended elements and sequences are then passed through the interface layer 308 and the design tools 310 to be displayed via the user interface 312. Herein, the interface layer 308 implements application programming interfaces (APIs), with the two terms being interchangeably used, to integrate with the engineering design tools 310. Further, the user interface 312 allows the user to review the design recommendations.

The system 200 further includes a validation and feedback layer 316. The validation and feedback layer 316 involves validating the recommended engineering diagram elements and their connections by comparing them against historical data within the knowledge graph 304. Additionally, the validation and feedback layer 316 further receives, via the user interface 312, user feedback on the recommended engineering diagram elements and their connections. The knowledge graph 304 is updated based on the user feedback, completing the cycle and enhancing the knowledge base for future queries and recommendations.

The system 200 leverages the knowledge graph, machine learning algorithms, and natural language processing to provide an efficient approach for semi-automating the design of engineering diagrams, addressing the challenges inherent in traditional engineering design tools. The system 200 provides an end-to-end solution for automating engineering designs, making the entire process more efficient, accurate, and user-friendly.

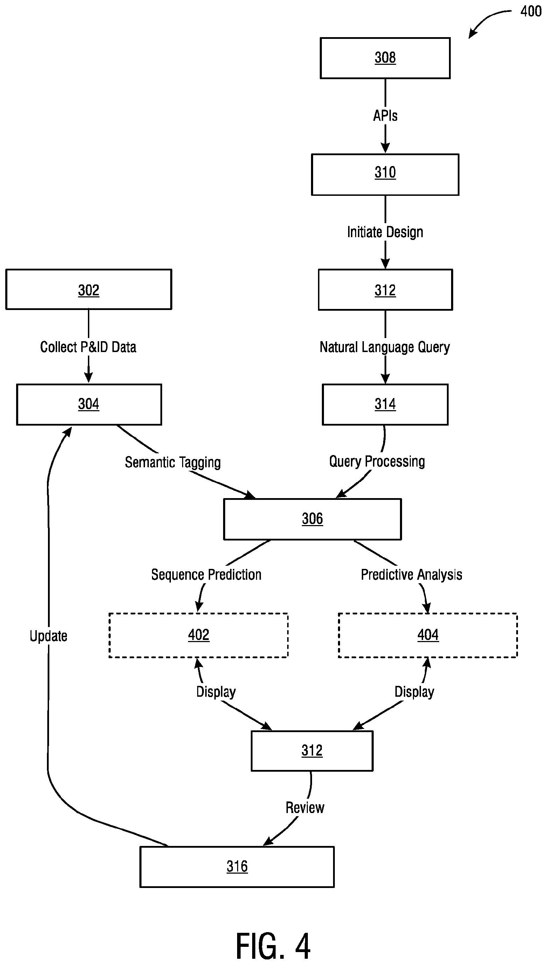

Referring to FIG 4, illustrated is a flowchart of a process 400 for semi-automating design of engineering diagrams. The process 400 begins with the data ingestion layer 302 responsible for collecting and storing design data. The data ingestion layer 302 populates the knowledge graph 304 with historical and real-time information. The knowledge graph 304 is a semantic database that stores all the engineering diagram elements and their relationships. Each node and edge in the knowledge graph 304 is semantically tagged with domain-specific metadata, enriching the raw data to make it useful for computational analysis.

The process 400 continues with the interface layer 308, i.e., the application programming interfaces (APIs) 308 to integrate with engineering design tools 310. These APIs 308 facilitate communication between the engineering design tools 310, where the actual engineering diagram design work is initiated and carried out. Further, the user interface 312 captures user inputs in the form of natural language queries related to engineering diagrams. These queries are processed by the language model 314, which interprets the queries and generates corresponding structured queries. The language model 314 employs a Large Language Model (LLM) to convert the natural language queries into a format suitable for querying the knowledge graph 304.

Further, the computational engine 306 performs predictive analysis and sequence prediction on the query results to recommend engineering diagram elements and their connections. Herein, the computational engine 306 generates recommend sequence (as represented by reference numeral 402) and recommend elements (as represented by reference numeral 404). In the present configuration, the recommend sequence 402 may be generated utilizing Long Short-Term Memory (LSTM) algorithms to determine subsequent engineering diagram elements following initially recommended engineering diagram elements; and the recommend elements 404 may be generated utilizing machine learning algorithms, including at least one of random forest or decision trees, to identify common patterns of engineering diagram elements frequently used together.

In the process 400, the recommendations generated by the computational engine 306 are displayed via the user interface 312. The user interface 312 allows users to review the recommended engineering diagram elements and their connections. The process 400 concludes by implementing the validation and feedback layer 316. In this step, the recommended engineering diagram elements and their connections are validated by comparing them against historical data within the knowledge graph 304. Additionally, user feedback on the recommendations is received via the user interface 312. This feedback is also used to update the knowledge graph 304, enhancing the accuracy and relevance of future recommendations.

In an exemplary use case for designing a Piping and Instrumentation Diagram (P&ID) for a new thermal power plant, the process 400 for semi-automating design of engineering diagrams operates as follows. The process 400 begins when a user initiates a new P&ID project using an engineering design tool 310 integrated with the system via the implemented application programming interfaces (APIs) 308. The user then inputs a natural language query via the user interface 312, such as "Design a basic layout for a thermal power plant with a focus on the steam generation system."

The language model 314 processes the received natural language query to interpret the query and generate a corresponding structured query. In this case, the language model 314 identifies key terms like "thermal power plant" and "steam generation system" and converts the query into a SPARQL format for querying the knowledge graph 304. The process 400 proceeds with querying the knowledge graph 304 with the structured query. The knowledge graph 304, which includes nodes representing engineering diagram elements and edges representing connections between the engineering diagram elements, is searched for relevant data related to thermal power plants and steam generation systems.

The computational engine 306 then conducts predictive analysis and sequence prediction on the query results. The predictive analysis, utilizing machine learning algorithms such as random forest or decision trees, recognizes that elements like boilers, turbines, and condensers are commonly used in thermal power plants. The sequence prediction, employing Long Short-Term Memory (LSTM) algorithms, anticipates that after a boiler, a steam turbine usually follows in the design. Based on this analysis, the process 400 generates recommendations for engineering diagram elements and their connections. These recommendations include domain-level symbols such as boilers, turbines, and condensers, as well as suggested connections, such as connecting the boiler to the turbine with a high-pressure steam pipe.

The process 400 then displays the recommended engineering diagram elements and their connections via the user interface 312. The user can review these recommendations and choose to accept, modify, or reject them. If accepted, the recommended elements are integrated into the P&ID design in the engineering design tool 310. As the user continues to design, the process 400 performs real-time validation of the recommended engineering diagram elements and their connections by comparing them against historical data within the knowledge graph 304. This validation process flags any anomalies or non-standard configurations instantly.

Once the user is satisfied with the design, a final validation check is performed to ensure all elements are compatible and meet industry standards. After this final review, the process 400 includes receiving user feedback on the recommended engineering diagram elements and their connections via the user interface 312. Finally, the process 400 concludes with updating the knowledge graph 304 based on the user feedback. Any new patterns or configurations used in the design are incorporated into the knowledge graph 304, enriching it for future projects and improving subsequent recommendations.

This use case demonstrates how the process 400 for semi-automating design of engineering diagrams provides an end-to-end solution for creating P&IDs, enhancing efficiency and accuracy in the engineering design process. The process 400 leverages the knowledge graph, machine learning algorithms, and natural language processing to provide an efficient approach for semi-automating the design of engineering diagrams, addressing the challenges inherent in traditional design methods.

The present disclosure provides a method for semi-automating design of engineering diagrams that addresses the challenges of inefficiency, complexity, and risk of errors in manual design processes. The method integrates a knowledge graph that includes nodes representing engineering diagram elements and edges representing connections between the engineering diagram elements, providing a rich, structured source of domain knowledge to guide the automated design process. This knowledge graph is queried using structured queries generated from natural language input, leveraging a language model to interpret user queries and convert them into a format suitable for knowledge graph interrogation. The method employs a computational engine that conducts predictive analysis and sequence prediction on the query results, utilizing machine learning algorithms including random forest, decision trees, and Long Short-Term Memory (LSTM) algorithms to recommend engineering diagram elements and their connections.

By implementing application programming interfaces (APIs) to integrate with engineering design tools, the method incorporates into existing workflows. The ability of the method to process natural language queries and provide context-aware recommendations makes it accessible to engineers of all experience levels, bridging the gap between novice and expert designers. The real-time validation of recommended engineering diagram elements and their connections against historical data within the knowledge graph significantly reduces the risk of design errors and inconsistencies. Furthermore, the capacity of the method to update the knowledge graph based on user feedback ensures continuous improvement and adaptation to evolving design practices and technologies.

The semi-automated nature of the method, from data ingestion to user validation, substantially reduces the time spent on manual tasks while maintaining human oversight for critical decisionmaking. The dynamic adaptability of the method, capable of incorporating new types of engineering diagram elements and connections, ensures its relevance and effectiveness. By combining these features, the present invention offers an efficient and user-friendly alternative to traditional engineering diagram design methods, significantly improving the accuracy, consistency, and speed of the design process.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### REFERENCE NUMERALS

| | |
|---|---|
| METHOD | 100 |
| STEP | 102 |
| STEP | 104 |
| STEP | 106 |
| STEP | 108 |
| STEP | 110 |
| STEP | 112 |
| SYSTEM | 200 |
| BUS | 202 |
| PROCESSING UNIT | 204 |
| MEMORY UNIT | 206 |
| INTERFACE | 208 |
| DATABASE | 210 |
| INPUT DEVICE | 212 |
| OUTPUT DEVICE | 214 |
| ENGINEERING DIAGRAM DESIGN MODULE | 216 |
| EXTRACTION MODULE | 301 |
| DATA INGESTION LAYER | 302 |
| KNOWLEDGE GRAPH | 304 |
| COMPUTATIONAL ENGINE | 306 |
| INTERFACE LAYER | 308 |
| ENGINEERING DESIGN TOOLS | 310 |
| USER INTERFACE | 312 |
| LANGUAGE MODEL | 314 |
| VALIDATION AND FEEDBACK LAYER | 316 |
| PROCESS | 400 |
| RECOMMEND SEQUENCE | 402 |
| RECOMMEND ELEMENTS | 404 |

## Claims

1. A method (100) for semi-automating design of engineering diagrams, the method (100) comprising:
receiving, via a user interface (312), a natural language query related to an engineering diagram from a user;
processing the received natural language query using a language model (314) to interpret the query and generate a corresponding structured query;
querying a knowledge graph (304) with the structured query, wherein the knowledge graph (304) includes nodes representing engineering diagram elements and edges representing connections between the engineering diagram elements;
retrieving query results from the knowledge graph (304) including relevant engineering diagram elements and connections;
conducting one or more of predictive analysis and sequence prediction on the query results to recommend engineering diagram elements and their connections; and
displaying, via the user interface (312), the recommended engineering diagram elements and their connections.

2. The method (100) of claim 1, further comprising:
receiving, via the user interface (312), user feedback on the recommended engineering diagram elements and their connections; and
updating the knowledge graph (304) based on the user feedback.

3. The method (100) of claim 1, further comprising validating the recommended engineering diagram elements and their connections by comparing them against historical data within the knowledge graph (304).

4. The method (100) of claim 1, wherein the predictive analysis utilizes machine learning algorithms including at least one of random forest or decision trees to identify common patterns of the engineering diagram elements frequently used together.

5. The method (100) of claim 1, wherein the sequence prediction utilizes Long Short-Term Memory (LSTM) algorithms to determine subsequent engineering diagram elements following initially recommended engineering diagram elements.

6. The method (100) of claim 1, wherein the knowledge graph (304) has each node and edge being semantically tagged with domain-specific metadata.

7. The method (100) of claim 1, wherein the language model (314) is a Large Language model (314) (LLM) configured to convert the natural language query into a SPARQL query for querying the knowledge graph (304).

8. The method (100) of claim 1 further comprising implementing application programming interfaces (APIs) (308) to integrate with engineering design tools (310).

9. A system comprising:
one or more processing units (204); and
a memory unit (206) communicatively coupled to the one or more processing units (204), wherein the memory unit (206) comprises an engineering diagram design module (216) stored in the form of machine-readable instructions executable by the one or more processing units (204), wherein the engineering diagram design module (216) is configured to perform method (100) steps for semi-automating design of engineering diagrams, according to any of the claims 1 to 8.

10. A computer-program product having machine-readable instructions stored therein, which when executed by one or more processing units (204), cause the one or more processing units (204) to perform a method (100) according to any of the claims 1 to 8.
